# EUROPEAN PATENT APPLICATION

(11) **EP 4 596 149 A1**
(43) Date of publication of application: **06.08.2025**
(21) Application number: 23871751.6
(22) Date of filing: 04.09.2023
(51) Int. Cl.: B23B 13/00, B23Q 11/00

(54) **MACHINE TOOL SYSTEM, AND METHOD FOR CONTROLLING MACHINE TOOL SYSTEM**

(30) Priority: 29.09.2022 JP 2022157098
(71) Applicant: Star Micronics Co., Ltd., Shizuoka-shi, Shizuoka 422-8654 (JP)
(72) Inventor: MOCHIZUKI Kazuyuki, Shizuoka-shi, Shizuoka 422-8654 (JP); ATSUHARA Shota, Shizuoka-shi, Shizuoka 422-8654 (JP)
(74) Representative: Grünecker Patent- und Rechtsanwälte PartG mbB
(86) International application number: PCT/JP2023/032176
(87) International publication number: WO 2024/070511

(57) **Abstract**

Provided are a machine tool system having superior operability, in which complicated tasks can be omitted, and a control method for the machine tool system. The machine tool system has a spindle 25 that can move in an axial direction of a bar W, a guide bush 26 that supports the bar W, a first tool post 27 to which a first tool T1 for machining a tip end part of the bar W supported by the guide bush 26 is attached, a feed arrow 44 capable of biasing the bar W toward the tip end side of the bar W, a first control apparatus 20 that controls operations of the spindle 25 and operations of the first tool post 27, and a second control apparatus 40 that controls operations of the feed arrow 44, wherein the first control apparatus 20 includes a bar retraction mode in which the first tool post 27 is caused to machine the tip end of the bar W in a state where the bar W is gripped by the spindle 25, the spindle 25 is retracted and the bar W is extracted from the guide bush 26, and the second control apparatus 40 is caused to release the bias applied by the feed arrow 44 and release the grip of the spindle 25 on the bar W.

## Description

### Technical Field

The present invention relates to a machine tool system including a spindle and a feed arrow, and a control method for the machine tool system.

### Background Art

A conventional machine tool system may include a machining apparatus on which a spindle and a tool post are provided, and a bar feeder that supplies an elongated bar to the machining apparatus (for example, see PTL 1). The spindle of the machining apparatus rotates while gripping the bar releasably. The spindle is configured to be capable of moving in the axial direction of the bar in both a state in which the bar is gripped thereby and a state in which the bar is released. A first control apparatus is incorporated into the machining apparatus. The first control apparatus controls the operations of the tool post, to which a machining tool is attached, the spindle, and so on in accordance with a machining program (an NC program) created by an operator or the like of the machine tool system and input operations performed using an operation panel provided on the machining apparatus. When the first control apparatus controls the operations of the tool post and the spindle in accordance with the machining program, a tip end part of the bar is machined to a desired shape, whereupon the machined part is cut off. In many cases, the bar is gripped by the spindle from the start of machining by the machining tool to the point at which the machined part is cut off. The machining apparatus changes the grip on the bar after the machined part is cut off. When the grip is changed, the grip applied by the spindle is released, whereupon the spindle moves to a rear end side of the bar and then re-grips the bar. By repeating machining using the machining tool and changing the grip on the bar over a plurality of cycles, a plurality of products corresponding to the number of cycles are manufactured from a single bar. Note that when a product of a length that exceeds the movable distance of the spindle is manufactured, a grip changing operation may be included in one cycle.

The bar feeder is arranged side by side within the machining apparatus further toward the rear end side of the bar than the machining apparatus. The bar feeder includes a feed arrow, a feed arrow drive mechanism for moving the feed arrow in the axial direction of the bar, and a second control apparatus for controlling the operation of the feed arrow drive mechanism. The feed arrow has a finger chuck on a tip end thereof. The finger chuck grips the rear end part of the bar, whereby the feed arrow is connected to the bar. When the feed arrow is fed toward the tip end side of the bar by the feed arrow drive mechanism, the bar introduced into the bar feeder is supplied to the machining apparatus. During machining by the machining apparatus, the feed arrow biases the bar from the rear end side of the bar toward the tip end side of the bar by a predetermined load. This load is set at a comparatively weak load so that no slippage occurs between the bar and the spindle while the bar is gripped by the spindle.

### Citation List

### Patent Literature

PTL 1: Japanese Patent Application Publication No. 2005-313267

### Summary of Invention

### Technical Problem

In this conventional machine tool system, the first control apparatus controls the operations of the machining apparatus, including the tool post and the spindle, and the second control apparatus controls the operations of the bar feeder, including the feed arrow. As a result, a problem occurs in that during startup, when a power supply of the machine tool system is switched on, and during shutdown of the machine tool system, for example, the operator must go back and forth between the machining device and the bar feeder and perform complicated tasks such as issuing instructions and performing operations on each of the first and second control apparatuses in accordance with predetermined procedures. Moreover, during these tasks, the operator may make mistakes in the task procedures.

The present invention has been designed in consideration of the problems described above, and an object thereof is to provide a machine tool system having superior operability, in which complicated tasks can be omitted, and a control method for the machine tool system. Solution to Problem

To solve the problems described above, a machine tool system of the present invention has a spindle that can move in an axial direction of a bar while gripping the bar releasably, a guide bush disposed further toward a tip end side of the bar than the spindle in order to support the bar, a tool post to which a machining tool for machining a tip end part of the bar supported by the guide bush is attached, a feed arrow capable of biasing the bar from a rear end side of the bar toward the tip end side of the bar, a first control apparatus that controls operations of the spindle and operations of the tool post, and a second control apparatus that controls operations of the feed arrow, wherein the first control apparatus includes a bar retraction mode in which the tool post is caused to machine the tip end of the bar in a state where the bar is gripped by the spindle, the spindle is retracted and the bar is extracted from the guide bush, and the second control apparatus is caused to release the bias applied by the feed arrow and release the grip of the spindle on the bar.

According to this machine tool system, in the bar retraction mode, a series of operations including operations of the feed arrow is executed by control applied by the first control apparatus, thereby eliminating the need to issue instructions to and perform operations on each of the first control apparatus and the second control apparatus in accordance with predetermined procedures.

Here, in the bar retraction mode, the first control apparatus may cause the tool post to machine the tip end of the bar in a state where the bar is biased toward the tip end side of the bar by the feed arrow.

The machine tool system may include an input unit for inputting an instruction to the first control apparatus, and the bar retraction mode may be activated when the instruction is input from the input unit.

The bar retraction mode can be activated simply by inputting the instruction.

To solve the problems described above, a machine tool system of the present invention has a spindle that can move in an axial direction of a bar while gripping the bar releasably; a tool post to which a machining tool for machining a tip end part of the bar is attached; a feed arrow capable of biasing the bar from a rear end side of the bar toward the tip end side of the bar; a first control apparatus that controls operations of the spindle and operations of the tool post; and a second control apparatus that controls operations of the feed arrow, wherein the first control apparatus includes a bar supply mode in which the second control apparatus is caused to operate the feed arrow so as to move the bar to a position where the tip end part of the bar penetrates the spindle and projects further toward the tip end side than the spindle, the spindle is caused to grip the bar, the second control apparatus is caused to operate the feed arrow so as to bias the bar toward the tip end side, and the tool post is caused to cut off the tip end of the bar.

According to this machine tool system, in the bar supply mode, a series of operations including operations of the feed arrow is executed by control applied by the first control apparatus, thereby eliminating the need to issue instructions to and perform operations on each of the first control apparatus and the second control apparatus in accordance with predetermined procedures.

Further, the machine tool system may include an input unit for inputting an instruction to the first control apparatus, and the bar supply mode may be activated when the instruction is input from the input unit.

The bar supply mode can be activated simply by inputting the instruction.

To solve the problems described above, in a control method for a machine tool system of the present invention, the machine tool system has a spindle that can move in an axial direction of a bar while gripping the bar, a guide bush that supports the bar; a machining tool for machining a tip end part of the bar supported by the guide bush, and a feed arrow capable of biasing the bar from a rear end side of the bar toward a tip end side of the bar, and the control method includes a tip end machining step in which the machining tool machines the tip end of the bar in a state where the bar is gripped by the spindle; a bar extraction step executed after the tip end machining step, in which the spindle is retracted and the bar is extracted from the guide bush; a bias releasing step executed after the bar extraction step, in which the bias applied by the feed arrow is released; and a grip releasing step executed after the bias releasing step, in which the grip of the spindle on the bar is released.

According to this control method for a machine tool system, the tip end machining step, the bar extraction step, the bias releasing step, and the grip releasing step are executed in series, and therefore complicated tasks such as issuing instructions and performing operations in the respective steps can be omitted.

Here, the tip end machining step may be a step in which the machining tool machines the tip end of the bar in a state where the bar is biased toward the tip end side of the bar by the feed arrow.

To solve the problems described above, in a control method for a machine tool system of the present invention, the machine tool system has a spindle that can move in an axial direction of a bar while gripping the bar, a machining tool for machining a tip end part of the bar, and a feed arrow capable of biasing the bar from a rear end side of the bar toward a tip end side of the bar, and the control method includes a bar feeding step in which the feed arrow is operated so as to feed the bar to a position where the tip end part of the bar penetrates the spindle and projects further toward the tip end side than the spindle; a gripping step executed after the bar feeding step, in which the spindle is caused to grip the bar; a biasing step executed after the gripping step, in which the feed arrow is operated so as to bias the bar toward the tip end side; and a tip end cut-off step executed after the biasing step, in which the machining tool cuts off the tip end of the bar.

According to this control method for a machine tool system, the bar feeding step, the gripping step, the biasing step, and the tip end cut-off step are executed in series, and therefore complicated tasks such as issuing instructions and performing operations in the respective steps can be omitted.

Furthermore, to solve the problems described above, a machine tool system of the present invention has a spindle that can move in an axial direction of a bar while gripping the bar releasably; a guide bush disposed further toward a tip end side of the bar than the spindle in order to support the bar; a tool post to which a machining tool for machining a tip end part of the bar supported by the guide bush is attached; a feed arrow capable of biasing the bar from a rear end side of the bar toward the tip end side of the bar; a first control apparatus that controls operations of the spindle and operations of the tool post; and a second control apparatus that controls operations of the feed arrow, wherein the first control apparatus includes a bar retraction mode in which the tool post is caused to machine the tip end of the bar in a state where the bar is gripped by the spindle, the spindle is retracted and the bar is extracted from the guide bush, the second control apparatus is caused to release the bias applied by the feed arrow and release the grip of the spindle on the bar, and the position of the spindle and the position of the feed arrow are stored in a storage unit, and a bar supply mode in which the spindle is moved to the position of the spindle stored in the storage unit, the second control apparatus is caused to operate the feed arrow so as to move the feed arrow to the position of the feed arrow stored in the storage unit, the spindle is caused to grip the bar, the second control apparatus is caused to operate the feed arrow so as to bias the bar toward the tip end side, and the tool post is caused to cut off the tip end of the bar.

According to this machine tool system, a series of operations including operations of the feed arrow is executed in each of the bar retraction mode and the bar supply mode by control applied by the first control apparatus, thereby eliminating the need to issue instructions to and perform operations on each of the first control apparatus and the second control apparatus in accordance with predetermined procedures. As a result, an effect is achieved in that the time and power required to move the feed arrow to the origin and the time and power required to move the feed arrow from the origin to a position where the tip end of the bar is further toward the tip end side than the spindle can be reduced.

### Advantageous Effects of Invention

According to the present invention, it is possible to provide a machine tool system having superior operability, in which complicated tasks can be omitted, and a control method for the machine tool system.

### Brief Description of Drawings

[Fig. 1] Fig. 1 is a front view of a lathe system according to an embodiment.
[Fig. 2] Fig. 2 is a simplified plan view showing an internal configuration of the lathe system shown in Fig. 1.
[Fig. 3] Fig. 3 is a block diagram showing a hardware configuration of the lathe system shown in Fig. 1.
[Fig. 4] Fig. 4 is a flowchart showing an operation of a bar retraction mode of the lathe system shown in Fig. 1.
[Fig. 5] Fig. 5 is a flowchart showing an operation of a bar supply mode of the lathe system shown in Fig. 1.
[Fig. 6] Fig. 6 is a flowchart showing an operation of a modified example of the bar retraction mode shown in Fig. 4.
[Fig. 7] Fig. 7 is a flowchart showing an operation of a modified example of the bar supply mode shown in Fig. 5.

### Description of Embodiments

An embodiment of the present invention will be described below with reference to the figures. In this embodiment, an example in which the present invention is applied to a lathe system including an NC lathe and a bar feeder will be described.

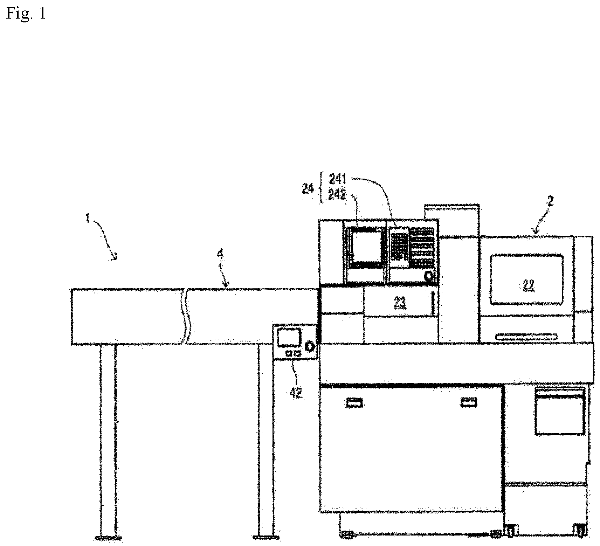

Fig. 1 is a front view of the lathe system according to this embodiment.

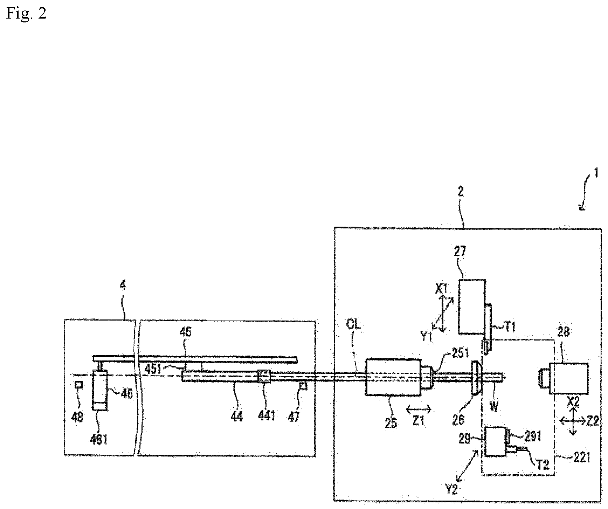

As shown in Fig. 1, a lathe system 1 of this embodiment includes an NC lathe 2 serving as a machining apparatus, and a bar feeder 4 serving as a material supply apparatus. The lathe system 1 corresponds to an example of a machine tool system. The NC lathe 2 of this embodiment is a so-called Swiss lathe. The NC lathe 2 includes a cutting chamber 22, a spindle chamber 23, and a lathe operation panel 24. The cutting chamber 22 is a chamber in which a space for machining a tip end part of a bar W (see Fig. 2) is formed, and is disposed on the right side of the NC lathe 2 when looking from the front surface side. The spindle chamber 23 is a chamber in which a spindle 25 (see Fig. 2) is disposed, and is disposed on the left side of the NC lathe 2 when looking from the front surface side.

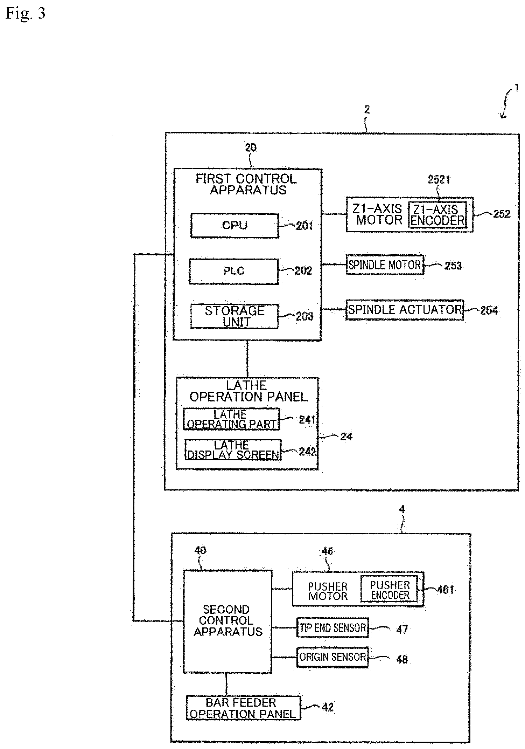

The lathe operation panel 24 includes a lathe operating part 241 and a lathe display screen 242. The lathe operating part 241 is constituted by a plurality of buttons, keys, and so on for receiving input operations performed by an operator of the lathe system 1. The lathe operating part 241 corresponds to an example of an input unit. Note that the lathe operating part 241 may be a touch panel integrated with the lathe display screen 242. The operator of the lathe system 1 can store a machining program created using the lathe operating part 241 and an external computer in a storage unit 203 (see Fig. 3), to be described below. The operator of the lathe system 1 can also correct the machining program using the lathe operating part 241 and store the corrected machining program in the storage unit 203. Furthermore, the operator of the lathe system 1 can use the lathe operating part 241 to operate respective constituent elements of the lathe system 1 either individually or in conjunction with each other. The lathe display screen 242 is a display for displaying the machining program stored in the storage unit 203 and various information relating to the lathe system 1, such as various setting values of the lathe system 1 and error content.

The bar feeder 4 supplies the elongated bar W (see Fig. 2) to the NC lathe 2. The bar feeder 4 is arranged side by side with the NC lathe 2. A plurality of bars W are stored in the bar feeder 4. The bar feeder 4 feeds one of the stored bars W toward the NC lathe 2. Further, the bar feeder 4 extracts a remnant, which is a bar W that has become short as a result of machining, from the NC lathe 2 and discharges the remnant. After discharging the remnant, the bar feeder 4 feeds a new bar W from among the stored bars W toward the NC lathe 2. The bar feeder 4 is provided with a bar feeder operation panel 42 that serves as an input apparatus for operating the bar feeder 4.

Fig. 2 is a simplified plan view showing an internal configuration of the lathe system shown in Fig. 1.

As shown in Fig. 2, the NC lathe 2 includes the spindle 25, a guide bush 26, a first tool post 27, a back spindle 28, and a second tool post 29. The spindle 25, the guide bush 26, the first tool post 27, the back spindle 28, and the second tool post 29 are disposed on a leg serving as a base. The spindle 25, the first tool post 27, the back spindle 28, and the second tool post 29 operate in response to input from the machining program and the lathe operation panel 24 (see Fig. 1).

The spindle 25 is capable of moving in a Z1-axis direction. Note that although the spindle 25 is moved in the Z1-axis direction by a headstock together with the headstock, illustration and description of the headstock have been omitted. The Z1-axis direction is a horizontal direction, and the left-right direction in Fig. 2. The Z1-axis direction corresponds to the axial direction of the bar W. The spindle 25 has, on a tip end part thereof, a collet chuck 251 for releasably gripping the bar W inserted through the interior of the spindle 25. The collet chuck 251 corresponds to an example of a gripping unit. The spindle 25 is capable of rotating about a spindle axis CL while gripping the bar W. The direction of the spindle axis CL matches the Z1-axis direction. Hereinafter, movement of the spindle 25 to the tip end side of the bar W will be referred to as advancement, and movement of the spindle 25 to the rear end side of the bar W will be referred to as retraction.

The guide bush 26 is fixed to the leg serving as the base. An end surface of the guide bush 26 on the opposite side to the side on which the spindle 25 is disposed is exposed to the interior of the cutting chamber 22 (see Fig. 1). The guide bush 26 supports the tip end part of the bar W inserted through the interior of the spindle 25 so as to be free to slide in the Z1-axis direction. The part of the guide bush 26 that supports the bar W is capable of rotating about the spindle axis CL in synchronization with the spindle 25. The tip end part of the bar W projecting into the cutting chamber 22 from the guide bush 26 is machined by a first tool T1 attached to the first tool post 27. The first tool T1 corresponds to an example of a machining tool. Bending of the bar W during machining is suppressed by the guide bush 26, and therefore long, thin bars W in particular can be machined accurately by the NC lathe 2.

The first tool post 27 is capable of moving in an X1-axis direction, which is orthogonal to the Z1-axis direction and oriented in a horizontal direction, and a Y1-axis direction, which is oriented in a vertical direction. The first tool post 27 corresponds to an example of a tool post. In Fig. 2, the up-down direction is the X1-axis direction, and a direction that is orthogonal to the paper surface is the Y1-axis direction. A plurality of types of first tools T1, including a cutting tool, a cut-off tool, and so on, are attached to the first tool post 27 side by side in the Y1-axis direction in a gang-type form. Further, a rotary tool such as an endmill or a drill can be attached to the first tool post 27 as the first tool T1. The desired first tool T1 is selected from these plurality of types of first tools T1 by moving the first tool post 27 in the Y1-axis direction. Then, by moving the first tool post 27 in the X1-axis direction, the selected first tool T1 is gripped by the spindle 25 and the tip end part of the bar W, supported by the guide bush 26, is cut into and machined, whereupon the machined part of the bar W is cut off.

The back spindle 28 is capable of moving in an X2-axis direction and a Z2-axis direction. Note that although the back spindle 28 is moved in the X2-axis direction and the Z2-axis direction by a back headstock together with the back headstock, illustration and description of the back headstock have been omitted. The X2-axis direction is the same direction as the X1-axis direction described above, and the Z2-axis direction is the same direction as the Z1-axis direction described above. Further, the Z2-axis direction corresponds to the axial direction of the back spindle 28. Fig. 2 shows a state in which the back spindle 28 is positioned opposite the spindle 25 with the guide bush 26 therebetween. In this position, a back spindle axis serving as the rotation center of the back spindle 28 is disposed to be collinear with the spindle axis CL. The direction of the back spindle axis matches the Z2-axis direction. The machined part of the bar W, on which machining using the spindle 25 has been completed, is cut off by the first tool T1 for cut-off machining and transferred to the back spindle 28. Hereinafter, the cut-off machined part will be referred to as the cut-off part. The back spindle 28 releasably grips the cut-off part transferred thereto from the spindle 25. Further, the back spindle 28 conveys the gripped cut-off part by moving in the X2-axis direction and the Z2-axis direction.

The second tool post 29 is capable of moving in a Y2-axis direction. Note that the second tool post 29 may be configured to be capable of moving in the X2-axis direction. The Y2-axis direction is the same direction as the Y1-axis direction described above. A second tool T2 such as a drill or an endmill for machining the cut-off part is attached to the second tool post 29. Note that a plurality of second tools T2 are attached to the second tool post 29 side by side in the Y2-axis direction. The desired second tool T2 is selected from these plurality of second tools T2 by moving the second tool post 29 in the Y2-axis direction. Then, by moving the back spindle 28 in the X2-axis direction and the Z2-axis direction, a cut-off end side of the cut-off part gripped by the back spindle 28 is machined. When machining of the cut-off end side is complete, the cut-off part forms a product manufactured by the lathe system 1. Note that in certain cases, machining using the back spindle 28 is not performed. In these cases, the cut-off part forms the product as is. The second tool post 29 is provided with a product reception port 291 for receiving the product and a shooter, not shown in the figures. The shooter is provided inside the second tool post 29. The back spindle 28 inserts the product into the product reception port 291 and then releases the product, whereupon the product is pushed out by a cylinder provided on the back spindle 28 and dropped into the shooter. The dropped product is conveyed to a predetermined position by a conveyor, not shown in the figures, and discharged to a product storage unit provided on the outside of the lathe system 1.

A chip reception unit 221 for receiving chips and defective products generated as a result of the machining using the spindle 25 and the back spindle 28 is provided on a lower end of the cutting chamber 22 (see Fig. 1). The machined part of the bar W on which machining using the spindle 25 has been completed is cut off by the first tool T1 for cut-off machining in a state where the bar W is gripped respectively by the back spindle 28, which has been rotated in synchronization with the spindle 25 in a position opposing the spindle 25, and the spindle 25, and is thereby transferred to the back spindle 28. On the other hand, in a case where the machined part is cut off in a state where the machined part is not gripped by the back spindle 28, the machined part is dropped and thereby discharged into the chip reception unit 221.

The bar feeder 4 includes, in addition to the bar feeder operation panel 42 described above (see Fig. 1), a feed arrow 44, a feed arrow drive mechanism 45, a feed arrow motor 46, a tip end sensor 47, and an origin sensor 48. The feed arrow 44 is guided by a guide, not shown in the figures, so as to be free to move in the Z1-axis direction. A finger chuck 441 that grips the rear end of the bar W is provided on a tip end of the feed arrow 44. The finger chuck 441 is attached so as to be free to rotate relative to other parts of the feed arrow 44, and is thereby free to rotate using the spindle axis CL as a rotation axis. When the finger chuck 441 grips the rear end of the bar W, the feed arrow 44 is connected to the bar W. In other words, while the bar W is gripped by the finger chuck 441, the feed arrow 44 moves in the Z1-axis direction together with the bar.

The feed arrow drive mechanism 45 is constituted by pulleys, not shown in the figures, provided respectively on a front end side and a rear end side of the bar feeder 4, and a drive belt wrapped around the pulleys. A connecting portion 451 is fixed to the drive belt. The drive belt and the rear end part of the feed arrow 44 are connected by the connecting portion 451. The pulley provided on the rear end side of the bar feeder 4 is fixed to an output shaft of the feed arrow motor 46.

When the output shaft of the feed arrow motor 46 rotates in one direction, the feed arrow 44 is moved by the feed arrow drive mechanism 45 and the connecting portion 451 toward the NC lathe 2 along the Z1-axis. Conversely, when the output shaft of the feed arrow motor 46 rotates in the other direction, the feed arrow 44 is moved by the feed arrow drive mechanism 45 and the connecting portion 451 in a direction away from the NC lathe 2 along the Z1-axis. Of the plurality of bars W stored in the bar feeder 4, the bar W in a position where the axial center thereof coincides with the spindle axis CL is gripped by the finger chuck 441. Then, when the feed arrow 44 moves, the bar W gripped by the finger chuck 441 moves in the axial direction of the bar W. In other words, when the output shaft of the feed arrow motor 46 rotates in one direction, the bar W moves toward the tip end side thereof, and when the output shaft of the feed arrow motor 46 rotates in the other direction, the bar W moves toward the rear end side thereof. The feed arrow motor 46 includes a feed arrow encoder 461. Note that the feed arrow encoder 461 may be installed separately from the feed arrow motor 46. The rotation speed and rotation amount of the feed arrow motor 46 are detected by the feed arrow encoder 461. Detection results from the feed arrow encoder 461 are transmitted to the second control apparatus 40 (see Fig. 3).

The tip end sensor 47 detects the tip end of the bar W. Further, the origin sensor 48 detects whether or not the feed arrow 44 is positioned at the origin. The origin of the feed arrow 44 is positioned furthest toward the rear end side within the movement range of the feed arrow 44. Detection results from the tip end sensor 47 and the origin sensor 48 are transmitted to the second control apparatus 40 (see Fig. 3). The second control apparatus 40 ascertains the tip end position of the bar W prior to machining from the detection result of the tip end sensor 47 and the detection results of the feed arrow encoder 461. The feed arrow encoder 461 and the tip end sensor 47 correspond to an example of a bar tip end position detection means. Further, the second control apparatus 40 ascertains the position of the feed arrow 44 from the detection result of the origin sensor 48 and the detection results of the feed arrow encoder 461. The feed arrow encoder 461 and the origin sensor 48 correspond to an example of a feed arrow position detection means.

Fig. 3 is a block diagram showing a hardware configuration of the lathe system shown in Fig. 1. Note that in Fig. 3, parts of the hardware configuration of the lathe system 1 that are of little relevance to the present invention have been omitted, even if these parts are used to operate the constituent elements described heretofore.

As shown in Fig. 3, the NC lathe 2 includes the first control apparatus 20, the lathe operation panel 24 described above, a Z1-axis motor 252, a spindle motor 253, and a spindle actuator 254. The first control apparatus 20 is a so-called NC (Numerical Control) apparatus, and includes a CPU 201, a PLC (Programmable Logic Controller) 202, and the storage unit 203. The first control apparatus 20 is a computer having calculation functions realized by the CPU 201. The first control apparatus 20 controls the operations of constituent elements such as the spindle 25, the first tool post 27, the back spindle 28, and the second tool post 29, shown in Fig. 2, in accordance with the machining program stored in the storage unit 203 and input from the lathe operation panel 24. Various programs, such as a ladder program and a macro program, are stored in advance in the storage unit 203 in addition to the machining program created by the operator. Fig. 3 shows some of the motors and actuators for driving the constituent elements. The first control apparatus 20 mainly performs numerical control on servo motors provided in the NC lathe 2. Further, the PLC 202 of the first control apparatus 20 mainly sequence-controls operations of devices provided in the NC lathe 2 other than the servo motors, such as cylinders and valves. The storage unit 203 is constituted by a nonvolatile memory such as a ROM, an HDD, or an SSD, and a volatile memory such as a RAM.

The Z1-axis motor 252 is a servo motor that rotates upon reception of a command from the first control apparatus 20. When the Z1-axis motor 252 rotates, the spindle 25 (see Fig. 2) moves in the Z1-axis direction. Note that an amplifier, not shown in the figure, is provided between the first control apparatus 20 and the Z1-axis motor 252, and the first control apparatus 20 controls the Z1-axis motor 252 by transmitting the command to the amplifier. Description of the amplifier has been omitted. The Z1-axis motor 252 includes a Z1-axis encoder 2521. By feeding back the output of the Z1-axis encoder 2521 to the first control apparatus 20, the first control apparatus 20 constantly ascertains the position of the spindle 25 (see Fig. 2) on the Z1-axis. The Z1-axis encoder 2521 corresponds to an example of a spindle position detection means.

The spindle 25 (see Fig. 2) is provided with a spindle motor 253 such as a built-in motor. The spindle motor 253 rotates upon reception of a command from the first control apparatus 20. When the spindle motor 253 rotates, the spindle 25 and the bar W (see Fig. 2) gripped by the spindle 25 rotate about the spindle axis CL (see Fig. 2). Note that similarly to the spindle 25, the back spindle 28 is provided with a back spindle motor, although description thereof has been omitted. The spindle actuator 254 is an actuator such as a hydraulic cylinder for operating the collet chuck 251 (see Fig. 2). When a chuck sleeve, not shown in the figure, is moved to the tip end side by the spindle actuator 254, the collet chuck 251 closes such that the bar W is gripped by the spindle 25. Further, when the chuck sleeve moves toward the rear end, the collet chuck 251 opens such that the spindle 25 releases the bar W.

The bar feeder 4 includes the second control apparatus 40 in addition to the bar feeder operation panel 42, the feed arrow motor 46, the tip end sensor 47, and the origin sensor 48, described above. The second control apparatus 40 is a control apparatus for performing sequence control on the constituent elements of the bar feeder 4. The second control apparatus 40 controls operations of the feed arrow motor 46 and an actuator, not shown in the figure, provided in the bar feeder 4 on the basis of information received from the sensors, the feed arrow encoder 461, and so on. Furthermore, the second control apparatus 40 controls operations of the bar feeder 4 in response to operation requests from the first control apparatus 20.

The feed arrow motor 46 is a servo motor that rotates upon reception of a command from the second control apparatus 40. When the feed arrow motor 46 rotates, the feed arrow 44 (see Fig. 2) moves in the Z1-axis direction. As described above, the second control apparatus 40 constantly ascertains the position of the feed arrow 44 in the Z1-axis direction by ascertaining, from the detection result of the origin sensor 48 and the detection results of the feed arrow encoder 461, the movement distance of the feed arrow 44 from the origin. The second control apparatus 40 then transmits the ascertained position to the first control apparatus 20 as information relating to the bar feeder 4. The second control apparatus 40 also transmits the positions, in the Z1-axis direction, of the tip end of a newly supplied bar W and the tip end of the bar W fed to the NC lathe 2 first after switching on the power supply to the first control apparatus 20. From the point at which the NC lathe 2 starts machining to the point at which extraction of the remnant is started, the feed arrow motor 46 is controlled by the second control apparatus 40 so as to rotate at a basically constant torque and in one direction. As a result, the bar W is biased by the feed arrow 44 toward the tip end side of the bar W by a set load. This load is set at a comparatively weak load at which there is no risk of slippage occurring between the bar W and the spindle 25 while the spindle 25 grips the bar W.

The bar feeder operation panel 42 is a touch panel in which an operating part and a display screen are integrated. Note that in addition to the bar feeder operation panel 42, the bar feeder 4 is provided with an emergency stop button, a switch for setting the torque of the feed arrow motor 46, and so on. The operator of the lathe system 1 can use the bar feeder operation panel 42 to move the feed arrow 44 (see Fig. 2) in the Z1-axis direction by a manual operation and input various setting values of the bar feeder 4. Furthermore, various information relating to the bar feeder 4, such as the various setting values of the bar feeder 4 and error content, and a button for operating the bar feeder 4 are displayed on the bar feeder operation panel 42.

The first control apparatus 20 and the second control apparatus 40 are connected by a signal cable. The first control apparatus 20 transmits operation requests and so on to the second control apparatus 40 through the signal cable. Moreover, the second control apparatus 40 transmits various information relating to the bar feeder 4, including the position information of the feed arrow 44, to the first control apparatus 20 as needed through the signal cable.

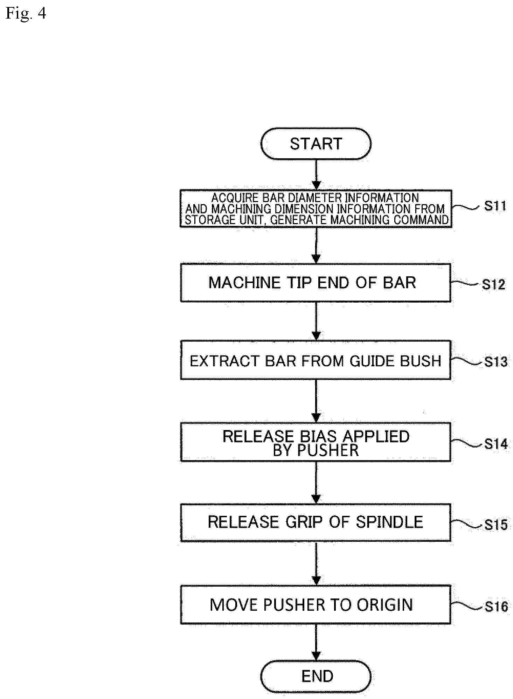

Fig. 4 is a flowchart showing an operation of a bar retraction mode of the lathe system shown in Fig. 1. The operation of the bar retraction mode, shown in Fig. 4, is an operation executed mainly by controlling the operation of the lathe system 1 using the first control apparatus 20 shown in Fig. 3. More specifically, the first control apparatus 20 performs calculations and determinations relating to this operation on the basis of the programs stored in the storage unit 203, controls the operations of the constituent elements of the NC lathe 2, and transmits operation requests to the second control apparatus 40.

The bar retraction mode is a mode that is activated by inputting an instruction to start the bar retraction mode into the first control apparatus 20 from the lathe operating part 241. More specifically, the bar retraction mode is activated when a bar retraction mode start switch is pressed or a command instructing the bar retraction mode is input on the lathe operating part 241. The bar retraction mode is a mode used when machining for the day has been completed and it is time to put the lathe system 1 away, or when it is necessary to extract the bar W from the guide bush 26 during a setup operation. The bar retraction mode is executed after machining of the product is complete. Normally, therefore, at the start point of the bar retraction mode, the bar W is gripped by the spindle 25 in a state where the bar W is biased toward the tip end side by the feed arrow 44. Also, the tip end of the bar W projects further toward the tip end side than the guide bush 26 and is therefore inside the cutting chamber 22. Note that when the bar W is not gripped by the spindle 25 at the start of the bar retraction mode, control for causing the spindle 25 to grip the bar W is performed prior to step S12, to be described below. Then, when the bar W is not biased by the feed arrow 44, the feed arrow 44 is caused to bias the bar W prior to step S12.

In the bar retraction mode, first, the first control apparatus 20 acquires information indicating the diameter of the bar W and information indicating machining dimensions of the tip end of the bar W in the bar retraction mode, this information being stored in the storage unit 203, and generates a machining command (step S11). The machining command is a command to perform machining for the purpose of deburring the tip end of the bar W, for example machining for beveling the tip end of the bar W. The machining dimension information can be rewritten from the lathe operating part 241, and by rewriting this information, it is possible to switch between rounding and chamfering (C-chamfering), to change the chamfering dimensions, and so on. Note that as regards the diameter information of the bar W, this information may be extracted from the description in the machining program and stored in the storage unit 203, or the operator may store information specified separately from the machining program in the storage unit 203. Next, machining of the tip end of the bar W is executed on the basis of the machining command generated in step S11 (step S12). Step S12 corresponds to an example of a tip end machining step.

Next, the spindle 25 is retracted and the bar W is extracted from the guide bush 26 (step S13). The spindle 25 is then retracted further to the spindle origin, which is the most retracted position thereof. Step S13 corresponds to an example of a bar extraction step. Note that when the bar W is extracted, the movement speed of the spindle 25 is set at a low speed to ensure that the guide bush 26 is not damaged, and after the bar W is extracted from the guide bush 26, the spindle 25 is retracted to the spindle origin at a high speed.

Next, the first control apparatus 20 releases biasing of the bar W toward the tip end side by the feed arrow 44 by causing the second control apparatus 40 to stop the torque of the feed arrow motor 46 (step S14). Next, the first control apparatus 20 causes the spindle 25 to release the bar W (step S15). Step S15 corresponds to an example of a grip releasing step. Finally, the first control apparatus 20 causes the second control apparatus 40 to retract the feed arrow 44 such that the feed arrow 44 is moved to the origin together with the bar W gripped thereby (step S16). Once this movement is complete, the bar retraction mode is complete.

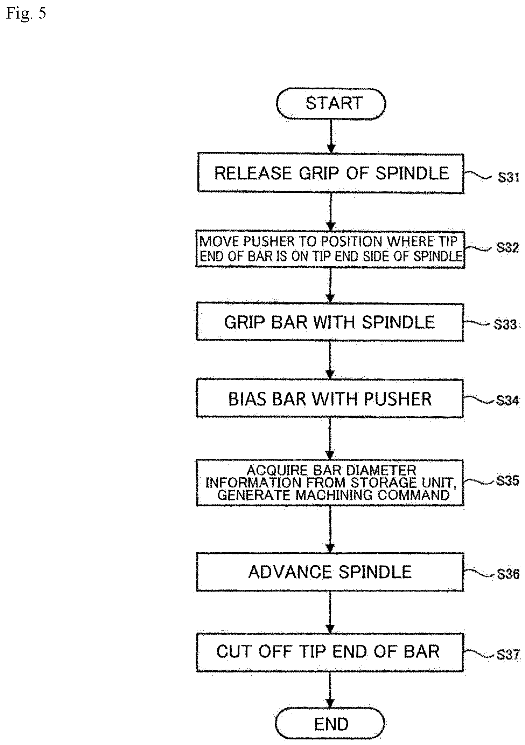

Fig. 5 is a flowchart showing an operation of a bar supply mode of the lathe system shown in Fig. 1. The operation of the bar supply mode, shown in Fig. 5, similarly to the operation of the bar retraction mode, is an operation executed mainly by controlling the operation of the lathe system 1 using the first control apparatus 20 shown in Fig. 3. More specifically, the first control apparatus 20 performs calculations and determinations relating to this operation on the basis of the programs stored in the storage unit 203, controls the operations of the constituent elements of the NC lathe 2, and transmits operation requests to the second control apparatus 40.

The bar supply mode is a mode that is activated by inputting an instruction to start the bar supply mode into the first control apparatus 20 from the lathe operating part 241. More specifically, the bar supply mode is activated when a bar supply mode start switch is pressed or a command instructing the bar supply mode is input on the lathe operating part 241. The bar supply mode is a mode used to enable the lathe system 1 to start machining after the power supply of the lathe system 1 has been switched on. When the bar supply mode is executed, in many cases, the feed arrow 44 is positioned at the origin and the tip end of the bar W is positioned on the rear end side of the spindle 25 in the release state in which the collet chuck 251 of the spindle 25 is open.

In the bar supply mode, first, the first control apparatus 20 opens the collet chuck 251 of the spindle 25 if the collet chuck 251 is closed in order to set the spindle 25 in the release state (step S31). Further, the first control apparatus 20 causes the second control apparatus 40 to move the feed arrow 44 to a position where the tip end part of the bar W penetrates the spindle 25 and projects further toward the tip end side than the spindle 25 (step S32). Step S32 corresponds to an example of a bar feeding step. Note that the second control apparatus 40 grips the tip end position of the bar W in accordance with detection of the tip end of the bar W by the tip end sensor 47 after the power supply is switched on, and the rotation amount detected by the feed arrow encoder 461 thereafter. In step S32, the second control apparatus 40 advances the feed arrow 44 by a predetermined distance in accordance with an operation request from the first control apparatus 20 after the tip end sensor 47 detects the tip end of the bar W. As a result, the tip end of the bar W is positioned between the spindle 25 and the guide bush 26. Further, after moving the feed arrow 44 by the predetermined distance, the second control apparatus 40 stops the feed arrow motor 46 and transmits a message indicating that the bar W has reached a predetermined position to the first control apparatus 20.

Once movement of the feed arrow 44 in step S32 is complete, the first control apparatus 20 causes the spindle 25 to grip the bar W (step S33). Step S33 corresponds to an example of a gripping step. Next, the first control apparatus 20 issues an operation request to the second control apparatus 40 so as to cause the second control apparatus 40 to generate torque in the feed arrow motor 46. As a result, the feed arrow 44 biases the bar W toward the tip end side (step S34). Step S34 corresponds to an example of a biasing step.

Next, a cut-off machining command for cutting off the tip end of the bar W is generated using the position information of the feed arrow 44 (step S35), whereupon the spindle 25 is advanced to a position at which the tip end of the bar W can be cut off (step S36). The tip end of the bar W is then cut off by the tool attached to the first tool post 27 (step S37). Step S37 corresponds to an example of a tip end cut-off step. Note that prior to step S37, the first tool T1 for cut-off machining may be selected by controlling the first tool post 27. Once cutting off of the tip end of the bar W is complete, the bar supply mode is complete.

According to the lathe system 1 described above, by activating the bar retraction mode, a series of operations including machining the tip end of the bar W and releasing the bias applied by the feed arrow 44 is executed by the first control apparatus 20, thereby eliminating the conventional need to issue instructions to and perform operations on each of the first control apparatus 20 and the second control apparatus 40 in accordance with predetermined procedures at the time of shutdown of the lathe system 1 and so on. Hence, complicated tasks for issuing instructions and performing operations while going back and forth between the NC lathe 2 and the bar feeder 4 can be omitted, and as a result, the operability of the lathe system 1 improves. Furthermore, mistakes by the operator in the operating procedures can be prevented. Moreover, the bar retraction mode is activated by input from the lathe operating part 241, and therefore the series of operations in the bar retraction mode can be executed by a simple operation. In addition, after the tip end of the bar W has been machined, the bar W is extracted from the guide bush 26, and therefore the guide bush 26 can be prevented from being damaged by burrs on the tip end of the bar W.

Furthermore, according to the lathe system 1 described above, by activating the bar supply mode, a series of operations including movement of the feed arrow 44 and biasing of the bar W thereby is executed by the first control apparatus 20, thereby eliminating the conventional need to issue instructions to and perform operations on each of the first control apparatus 20 and the second control apparatus 40 in accordance with predetermined procedures at the time of startup of the lathe system 1 and so on. Hence, complicated tasks for issuing instructions and performing operations while going back and forth between the NC lathe 2 and the bar feeder 4 can be omitted, and as a result, the operability of the lathe system 1 improves. Furthermore, mistakes by the operator in the operating procedures can be prevented. Moreover, the bar supply mode is activated by input from the lathe operating part 241, and therefore the series of operations in the bar supply mode can be executed by a simple operation.

According to the control method for the lathe system 1 described above, by activating the bar retraction mode, the tip end machining step, the bar extraction step, the bias releasing step, and the grip releasing step are executed in series, thereby eliminating the need for the operator to execute complicated tasks such as issuing instructions and performing operations in the respective steps. Furthermore, the guide bush 26 can be prevented from being damaged by burrs on the tip end of the bar W. Moreover, by activating the bar supply mode, the bar feeding step, the gripping step, the biasing step, and the tip end cut-off step are executed in series, thereby eliminating the need for the operator to execute complicated tasks such as issuing instructions and performing operations in the respective steps.

Next, a modified example of this embodiment will be described. In the following description, constituent elements with identical names to the constituent elements described heretofore, as well as identical control and operations, have been allocated the same reference symbols as those used heretofore, and duplicate description thereof has sometimes been omitted.

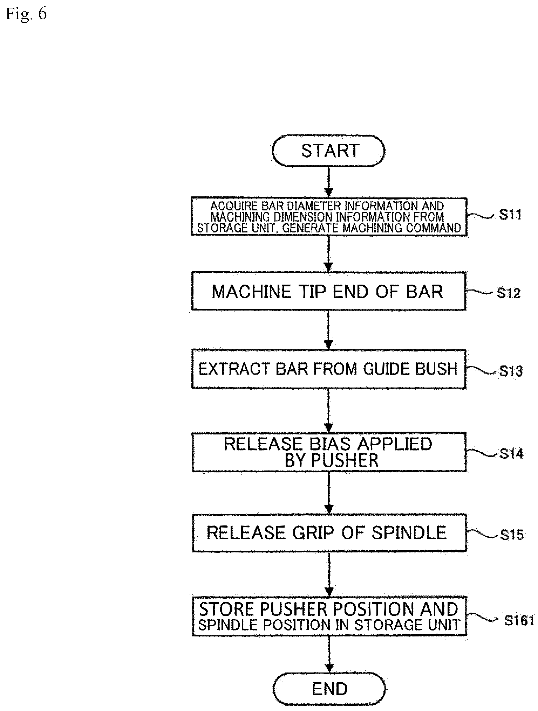

Fig. 6 is a flowchart showing an operation of a modified example of the bar retraction mode shown in Fig. 4.

As shown in Fig. 6, in the bar retraction mode of this modified example, in place of step S16, in which the second control apparatus 40 is caused to retract the feed arrow 44 to the origin, the position of the feed arrow 44 and the position of the spindle 25 at that point are stored in the nonvolatile memory constituting the storage unit 203 (step S161). In the bar retraction mode of this modified example, in addition to the effects of the bar retraction mode of the previous embodiment, an effect is achieved in that the time and power required to move the feed arrow 44 to the origin can be reduced.

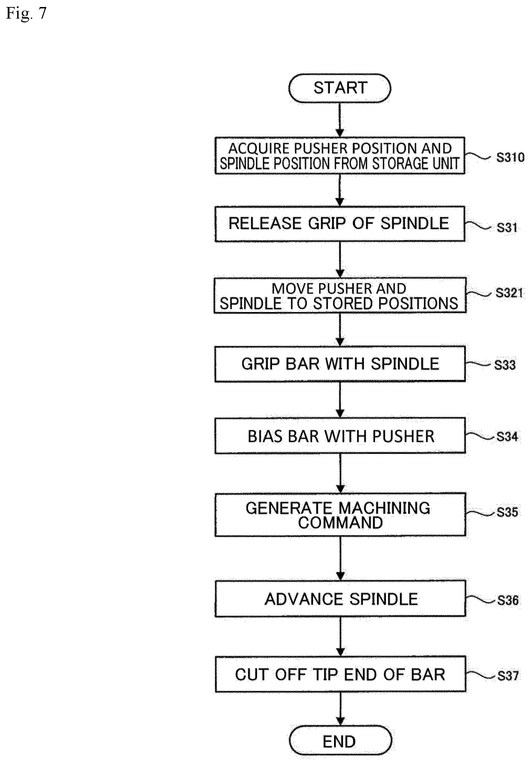

Fig. 7 is a flowchart showing an operation of a modified example of the bar supply mode shown in Fig. 5.

The bar supply mode of this modified example is a mode used to enable the lathe system 1 to start machining after executing the bar retraction mode of the modified example shown in Fig. 6. In other words, the bar supply mode is used in a set with the bar retraction mode of the modified example shown in Fig. 6.

As shown in Fig. 7, in the bar supply mode of this modified example, first, the position of the feed arrow 44 and the position of the spindle 25 stored in step S161 of the bar retraction mode of the modified example shown in Fig. 6 are acquired (step S310). Then, in place of step S32, in which the feed arrow 44 is moved to a position where the tip end part of the bar W projects further toward the tip end side than the spindle 25, the feed arrow 44 and the spindle 25 are moved to the positions acquired in step S310 (step S321). Note that prior to step S36, the distance by which the spindle 25 can be advanced from the position thereof may be calculated from information indicating the movable range of the spindle 25 and information indicating the position of the spindle 25 at that point, the distance by which the spindle 25 can be advanced may be compared with the advancement distance of the spindle 25 in the machining command generated in step S35, and when the latter is greater, an alarm may be issued to stop the lathe system 1.

According to the bar supply mode of this modified example, similar effects to those of the bar supply mode of the previous embodiment are achieved. Furthermore, in step 321, the feed arrow 44 is moved directly to the position stored in step S161, without moving the feed arrow 44 to the origin. Thus, the movement distance of the feed arrow 44 in step S321 is shorter than that of the movement of the feed arrow 44 in step S32 shown in Fig. 5, and as a result, the time and power required to move the feed arrow 44 can be reduced.

The present invention is not limited to the embodiment described above, and various amendments may be applied thereto within the scope set forth in the claims. For example, the back spindle 28 and the second tool post 29 of the NC lathe 2 may be omitted. Further, the first control apparatus 20 may execute other processing and control between or in parallel with the steps of the bar retraction mode and the bar supply mode.

Even constituent elements that are included only in the modified examples described above may be applied to other modified examples.

### Reference Signs List

- 1: Lathe system (machine tool system)
- 20: First control apparatus
- 25: Spindle
- 26: Guide bush
- 27: First tool post (tool post)
- 40: Second control apparatus
- 44: Feed arrow
- T1: First tool (machining tool)
- W: Bar

## Claims

1. A machine tool system comprising:
a spindle that can move in an axial direction of a bar while gripping the bar releasably;
a guide bush disposed further toward a tip end side of the bar than the spindle in order to support the bar;
a tool post to which a machining tool for machining a tip end part of the bar supported by the guide bush is attached;
a feed arrow capable of biasing the bar from a rear end side of the bar toward the tip end side of the bar;
a first control apparatus that controls operations of the spindle and operations of the tool post; and a second control apparatus that controls operations of the feed arrow, wherein
the first control apparatus includes a bar retraction mode in which the tool post is caused to machine the tip end of the bar in a state where the bar is gripped by the spindle, the spindle is retracted and the bar is extracted from the guide bush, and the second control apparatus is caused to release the bias applied by the feed arrow and release the grip of the spindle on the bar.

2. The machine tool system according to claim 1, comprising an input unit for inputting an instruction to the first control apparatus, wherein the bar retraction mode is activated when the instruction is input from the input unit.

3. A machine tool system comprising:
a spindle that can move in an axial direction of a bar while gripping the bar releasably;
a tool post to which a machining tool for machining a tip end part of the bar is attached;
a feed arrow capable of biasing the bar from a rear end side of the bar toward a tip end side of the bar;
a first control apparatus that controls operations of the spindle and operations of the tool post;
and a second control apparatus that controls operations of the feed arrow, wherein
the first control apparatus includes a bar supply mode in which the second control apparatus is caused to operate the feed arrow so as to move the bar to a position where the tip end part of the bar penetrates the spindle and projects further toward the tip end side than the spindle, the spindle is caused to grip the bar, the second control apparatus is caused to operate the feed arrow so as to bias the bar toward the tip end side, and the tool post is caused to cut off the tip end of the bar.

4. The machine tool system according to claim 3, comprising an input unit for inputting an instruction to the first control apparatus, wherein the bar supply mode is activated when the instruction is input from the input unit.

5. A control method for a machine tool system, the machine tool system having a spindle that can move in an axial direction of a bar while gripping the bar, a guide bush that supports the bar, a machining tool for machining a tip end part of the bar supported by the guide bush, and a feed arrow capable of biasing the bar from a rear end side of the bar toward the tip end side of the bar, the control method comprising:
a tip end machining step in which the machining tool machines the tip end of the bar in a state where the bar is gripped by the spindle;
a bar extraction step executed after the tip end machining step, in which the spindle is retracted and the bar is extracted from the guide bush;
a bias releasing step executed after the bar extraction step, in which the bias applied by the feed arrow is released;
and a grip releasing step executed after the bias releasing step, in which the grip of the spindle on the bar is released.

6. A control method for a machine tool system, the machine tool system having a spindle that can move in an axial direction of a bar while gripping the bar, a machining tool for machining a tip end part of the bar, and a feed arrow capable of biasing the bar from a rear end side of the bar toward a tip end side of the bar, the control method comprising:
a bar feeding step in which the feed arrow is operated so as to feed the bar to a position where the tip end part of the bar penetrates the spindle and projects further toward the tip end side than the spindle;
a gripping step executed after the bar feeding step, in which the spindle is caused to grip the bar;
a biasing step executed after the gripping step, in which the feed arrow is operated so as to bias the bar toward the tip end side;
and a tip end cut-off step executed after the biasing step, in which the machining tool cuts off the tip end of the bar.

7. A machine tool system comprising:
a spindle that can move in an axial direction of a bar while gripping the bar releasably;
a guide bush disposed further toward a tip end side of the bar than the spindle in order to support the bar;
a tool post to which a machining tool for machining a tip end part of the bar supported by the guide bush is attached;
a feed arrow capable of biasing the bar from a rear end side of the bar toward the tip end side of the bar;
a first control apparatus that controls operations of the spindle and operations of the tool post; and a second control apparatus that controls operations of the feed arrow, wherein
the first control apparatus includes a bar retraction mode in which the tool post is caused to machine the tip end of the bar in a state where the bar is gripped by the spindle, the spindle is retracted and the bar is extracted from the guide bush, the second control apparatus is caused to release the bias applied by the feed arrow and release the grip of the spindle on the bar, and the position of the spindle and the position of the feed arrow are stored in a storage unit, and a bar supply mode in which the spindle is moved to the position of the spindle stored in the storage unit, the second control apparatus is caused to operate the feed arrow so as to move the feed arrow to the position of the feed arrow stored in the storage unit, the spindle is caused to grip the bar, the second control apparatus is caused to operate the feed arrow so as to bias the bar toward the tip end side, and the tool post is caused to cut off the tip end of the bar.
